# EUROPÄISCHE PATENTANMELDUNG

(11) **EP 1 282 097 A2**
(43) Veröffentlichungstag der Anmeldung: **05.02.2003**
(21) Anmeldenummer: 02017209.4
(22) Anmeldetag: 31.07.2002
(51) Int. Cl.: G08G 1/16, G01S 13/93, B60R 1/00

(54) **Verfahren zur Verbesserung der Sicht in Fahrzeugen**

(30) Priorität: 04.08.2001 DE 10138361
(71) Anmelder: DaimlerChrysler AG, 70567 Stuttgart (DE)
(72) Erfinder: Holz, Michael, 89250 Senden (DE); Weidel, Edgar, 89250 Senden (DE)

(57) **Zusammenfassung**

Die Erfindung betrifft ein Verfahren zur Verbesserung der Sicht in einem Fahrzeug, insbesondere bei Dunkelheit, schlechter Witterung und Nebel, bei dem Laserlicht mit einer Wellenlänge außerhalb des sichtbaren Spektrums in einen vorgegebenen Raumwinkelbereich abgestrahlt wird, der mittels einer Kamera beobachtet wird, deren Bilder einem Fahrer angezeigt werden. Gemäß der Erfindung werden das Laserlicht und/oder die Kamera vorteilhaft außerdem zur optischen Kommunikation mit anderen Fahrzeugen verwendet.

## Beschreibung

Die Erfindung betrifft ein Verfahren zur Verbesserung der Sicht in einem Fahrzeug, nach dem Oberbegriff von Patentanspruch 1.

Zur Verbesserung der Sicht in Fahrzeugen bei Dunkelheit, schlechter Witterung und Nebel verwendet man ein optoelektronisches System, wie es z.B. in der DE 40 07 646 A1 dargelegt ist. Das System nimmt ein Videobild einer Verkehrsszene auf und stellt es dem Fahrer geeignet dar. Das dargestellte Bild enthält zusätzliche Informationen, die der Fahrer mit seinen eigenen Augen nicht oder nur mit Mühe erfassen kann, insbesondere bei Dunkelheit, schlechter Witterung und Nebel.

Das System enthält zusätzlich zu den normalen Scheinwerfern einen Infrarotscheinwerfer, der im nahen Infrarot emittierende Laserdioden als Lichtquelle nutzt. Die Laserdioden werden gepulst betrieben. Eine CCD-Kamera zur Aufnahme des Videobildes ist im Dachbereich des Fahrzeuges untergebracht. Die CCD-Kamera besitzt einen elektronischen Verschluss, der mit den Laserdioden synchronisiert ist. Vor dem Kameraobjektiv ist ein optisches Bandpassfilter angebracht. Das Videobild wird dem Fahrer auf einem LCD-Display gezeigt.

Ein andersartiges optoelektronisches System für Fahrzeuge ist ein Kommunikationssystem zur optischen Kommunikation zwischen Fahrzeugen, die Sichtkontakt haben.

Aus der JP 04241100 A1 ist so ein optisches Kommunikationssystem für Fahrzeuge bekannt, bei dem im Fahrzeug gemessene Abstandsinformationen in Bezug auf ein vorausfahrendes Fahrzeug über Lichtsender und _empfänger an ein nachfolgendes Fahrzeug übertragen werden. Ein ähnliches optisches Kommunikationssystem für Fahrzeuge ist aus der JP 07044800 A1 bekannt, wobei die übertragenen Informationen Warninformationen sind.

Aus der WO 95/04670 ist ein optisches Kommunikationssystem für Fahrzeuge bekannt, bei dem einander entgegenkommende Fahrzeug automatisch Informationen austauschen können. Ein ähnliches System ist aus der EP 0446 161 A1 bekannt, wobei an der Vorderseite und der Rückseite eines Fahrzeuges jeweils ein Lichtsender und ein Lichtempfänger angeordnet sind, um eine Kommunikation nach vorne und nach hinten zu ermöglichen.

Der Erfindung liegt die Aufgabe zugrunde, den Aufwand zur Realisierung sowohl eines Systems zur Sichtverbesserung als auch eines optischen Kommunikationssystems zu verringern.

Diese Aufgabe wird bei einem Verfahren nach dem Oberbegriff von Patentanspruch 1 durch dessen kennzeichnende Merkmale gelöst.

Der Erfindung liegt die Erkenntnis zugrunde, dass die Laserlichtquelle und die Kamera für das Nachtsichtsystem geeignet sind, auch die Funktion des Lichtsenders und des Lichtempfängers eines optischen Kommunikationssystems durchzuführen. Man muss nur das Laserlicht mit den zu übertragenden Informationen modulieren, und das von der Kamera empfangene Laserlicht führt man einem Demodulator zu, um es auf darin enthaltene Informationen auszuwerten.

Wenn ein Fahrzeug bereits mit einem Nachtsichtsystem ausgestattet ist, erhält man mit sehr geringem Aufwand den Zusatznutzen eines optischen Kommunikationssystems, das zumindest eine Kommunikation in Fahrtrichtung ermöglicht.

Wenn eine Kommunikationsmöglichkeit in beiden Richtungen gewünscht ist, kann man unter Umständen auch ohne zusätzliche Lichtsender und _empfänger hinten am Fahrzeug auskommen, wenn man einen Teil des Laserlichtes abzweigt, den man z.B. über Lichtleiter an die Rückseite des Fahrzeuges leitet, und die Kamera mit einer besonderen Optik versieht, die Licht von hinten auf einen Bereich der Fläche des CCD-Elementes lenkt, wobei aus dem elektrischen Signal, das dieser Bereich liefert, irgendwelche moduliert darin enthaltenen Informationen extrahiert werden können.

In einer bevorzugten Ausführungsform wird das Laserlicht von zwei oder mehr verschiedenen Typen von Laserscheinwerfern abgestrahlt, die jeweils unterschiedliche Teile des zu beobachtenden Raumwinkelbereiches ausleuchten. Dies hat den Vorteil, dass der Typ der Laserlichtquelle, die Lichtleistung, die Optik und ggf. die Wellenlänge der jeweiligen Laserscheinwerfer optimal an den jeweiligen Beleuchtungszweck angepasst werden kann, z.B. für einen "Straßenscheinwerfer" und einen "Personenscheinwerfer". Durch geeignete Wahl der von den verschiedenen Typen von Laserscheinwerfern ausgeleuchteten Teile des zu beobachtenden Raumwinkelbereiches und deren Überschneidungsbereiche kann man die Gesamt-Abstrahlcharakteristik auf sehr einfache Weise optimieren.

Bei dieser Optimierung kann man auch die Anforderungen des optischen Kommunikationssystems berücksichtigen, für das in der Regel nur einer von mehreren Laserscheinwerfern bzw. Typen von Laserscheinwerfern benötigt wird.

In einer weiteren bevorzugten Ausführungsform wird das Laserlicht an einer von der Vorderseite des Fahrzeuges entfernten Stelle erzeugt und durch einen Lichtleiter zur Vorderseite des Fahrzeuges geleitet, wo es von einer geeigneten Optik abgestrahlt wird. Dies hat den Vorteil, dass die empfindliche Laserlichtquelle an irgendeiner geschützten Stelle eingebaut werden kann, zum Beispiel innerhalb der Elektronik für das Nachtsichtsystem. Vorne am Fahrzeug muss sich nur die robustere Lichtaustrittsoptik befinden. Eine geschützte und erschütterungsarme Anbringung der Laserlichtquelle ist nicht zuletzt wegen ihrer zusätzlichen Verwendung für die Fahrzeugkommunikation von Vorteil.

Die Verwendung von Lichtleitern hat außerdem den Vorteil, dass diese auf einfache Weise mit Verzweigungen versehen werden können, entweder um mehrere Lichtaustrittsoptiken, darunter vorzugsweise eine auf der Rückseite des Fahrzeuges zur optischen Kommunikation mit nachfolgenden Fahrzeugen, mit Laserlicht aus einer gemeinsamen Quelle zu versorgen oder um das Licht mehrerer Laserlichtquellen, die auch verschiedene Wellenlängen haben können, an eine gemeinsame Lichtaustrittsoptik zu leiten.

Weitere Merkmale und Vorteile der Erfindung ergeben sich aus den Unteransprüchen und aus der folgenden Beschreibung von Ausführungsbeispielen eines Systems zur Verbesserung der Sicht in Fahrzeugen.

Ein Kraftfahrzeug enthält zwei oder mehr in Fahrtrichtung strahlende Infrarot-Laserscheinwerfer. Jeder Laserscheinwerfer enthält einen oder mehrere Infrarotlaser, insbesondere Laserdioden, die im nahen Infrarot arbeiten. Alternativ kann das System auch in einem anderen Spektralbereich außerhalb des sichtbaren Spektrums arbeiten, z.B. im fernen Infrarot oder mit ultraviolettem Licht.

Wenn jeder Laserscheinwerfer nur einen Laser enthält, gibt es verschiedene Möglichkeiten, den zu beobachtenden Raumwinkelbereich vor dem Fahrzeug auszuleuchten:
a) gleichzeitige Ausleuchtung des gesamten Bereiches durch zweidimensionale Strahlaufweitung des Laserstrahls
b) Aufweitung nur in einer Richtung bei gleichzeitiger enger Bündelung in der orthogonalen zweiten Richtung und Schwenken (scan) des ausgeleuchteten flachen Raumwinkelausschnitts in der zweiten Richtung
c) Schwenken des gesamten Laserstrahls in zwei Dimensionen zur abtastenden Ausleuchtung des gesamten Raumwinkelbereiches.

Alternativ besteht die Möglichkeit, ein Array von Laserdioden, die gemeinsam den gesamten Raumwinkelbereich ausleuchten, als Laserscheinwerfer zu verwenden.

Im Ausführungsbeispiel werden zwei verschiedene Typen von Laserscheinwerfern verwendet, die jeweils unterschiedliche Teile des zu beobachtenden Raumwinkelbereiches ausleuchten. Ein erster Typ Laserscheinwerfer, entweder ein Einzelscheinwerfer oder auch mehrere, z.B. zwei Laserscheinwerfer, die jeweils in der Nähe der konventionellen Scheinwerfer angebracht sind, bestrahlt ähnlich wie bei konventionellem Fernlicht im wesentlichen die vor dem Fahrzeug liegende Straße, d.h. einen relativ engen Ausschnitt aus dem zu beobachtenden Raumwinkelbereich. Ein zweiter Typ Laserscheinwerfer, ebenfalls entweder ein Einzelscheinwerfer oder mehrere, z.B. zwei Laserscheinwerfer, die jeweils in der Nähe der konventionellen Scheinwerfer angebracht sind, bestrahlt den gerade beobachteten Raumwinkelbereich mit Schwergewichten auf einem Bereich nahe vor dem Fahrzeug, d.h. vom Fahrzeug aus schräg nach unten, sowie - bedarfsweise asymmetrisch - schräg zur Seite. Insoweit hat der zweite Typ Laserscheinwerfer eine Abstrahlcharakteristik, die konventionellem Abblendlicht ähnlich ist, aber wegen der fehlenden Blendwirkung weiter nach oben gerichtet sein kann, um irgendwelche am Straßenrand befindlichen Personen zuverlässig zu erfassen.

Die Verwendung von zwei verschiedenen Typen von Laserscheinwerfern hat den Vorteil, dass die Laser und die Optik der einzelnen Laserscheinwerfer für den jeweiligen Einsatzzweck optimiert werden kann. Für einen "Straßenscheinwerfer" kommt man z.B. mit einer einzigen Laserdiode ohne jegliche Optik zur Strahlaufweitung aus, wenn die Eigendivergenz der Laserdiode gerade den für "Fernlicht" passenden Wert hat. Andererseits müssen an die Kohärenz des Lasers für einen "Personenscheinwerfer" und dessen Optik zur Strahlaufweitung keine hohen Ansprüche gestellt werden. Ferner können die Lichtleistung und eventuell auch die Wellenlänge der zwei Typen von Laserscheinwerfern optimal an den jeweiligen Einsatzzweck angepasst werden. Wenn zwei solche Laserscheinwerfer im Abstand voneinander angeordnet sind und Licht mit verschiedenen Wellenlängen abstrahlen, welche die weiter unten beschriebene Kamera voneinander trennen kann, ist mit einer einzigen Kamera Stereosehen möglich.

Das Laserlicht kann, muss aber nicht wie bei konventionellen Scheinwerfern unmittelbar vorne am Fahrzeug erzeugt werden. In einem Ausführungsbeispiel werden eine oder mehrere Laserlichtquellen in der Fahrzeugelektronik oder an einer anderen geschützten Stelle untergebracht, von der aus das Laserlicht durch Lichtleiter zu einer oder mehreren Lichtaustrittsoptiken geleitet wird, die den oder die Laserscheinwerfer bilden. Die Lichtleiter können sich auch verzweigen, so dass zum Beispiel ein Laser mehrere Laserscheinwerfer versorgen kann. Oder man kann das Licht mehrerer Laser, die für die vorher beschriebene Optimierung der Beleuchtung auch verschiedene Wellenlängen haben können, über sich vereinigende oder optisch miteinander gekoppelte Lichtleiter einem oder mehreren Laserscheinwerfern zuführen.

Das Kraftfahrzeug enthält weiterhin eine Kamera als Bildsensor, die so angeordnet ist, dass sie die Verkehrsszene aufnimmt, die sich in Fahrtrichtung darbietet. Die Kamera ist zumindest für das von der Umgebung reflektierte Licht des oder der Laserscheinwerfer empfindlich, in diesem Ausführungsbeispiel im nahen Infrarot. Das von der Kamera aufgenommene Videobild wird dem Fahrer auf einer Anzeigeoptik im Fahrzeug angezeigt, die zum Beispiel ein Display oben auf der Armaturentafel oder ein Projektor zum Einspiegeln des Bildes in einen Bereich der Frontscheibe nach Art eines Head-up-Displays ist.

Die Kamera ist unmittelbar hinter der Frontscheibe in der Nähe des Rückspiegels angebracht, wie z.B. in der GB 2271139 A1 beschrieben. Wie darin beschrieben, enthält die Frontscheibe an dieser Stelle einen Einsatz aus einem IR-durchlässigen Material. In dem hier beschriebenen Ausführungsbeispiel wird eine Frontscheibe aus homogenem Material verwendet, die mit einer Infrarot-abweisenden Folie zur Verminderung der Wärmeeinstrahlung bedeckt ist. Diese Folie ist im Bereich des Blickfeldes der Kamera ausgespart, um Infrarotlicht für die Kamera durchzulassen, wobei die geringe IR-Absorption im Glas selbst in Kauf genommen wird.

Der vertikale Abstand zwischen dem oder den konventionellen Scheinwerfern und den Laserscheinwerfern einerseits und der Kamera andererseits sollte so groß wie möglich sein, damit die Kamera durch den Lichtschleier, das atmosphärische Streulicht, der Scheinwerfer schauen kann. In dieser Hinsicht ist eine Anordnung in Höhe des Rückspiegels, wo man heute z.B. auch einen Regensensor anbringt, von Vorteil, kann aber je nach Fahrzeugdesign möglicherweise noch verbessert werden, indem man die Kamera immer so weit oben wie möglich anbringt.

Bei der oben beschriebenen Anordnung der Kamera hinter der Frontscheibe wird man außerdem darauf achten, das der im Blickfeld der Kamera liegende Bereich der Frontscheibe im Arbeitsbereich mindestens eines Scheibenwischers liegt, damit die Kamera auch bei Regen klare Sicht hat. Im Ausführungsbeispiel werden die Kamera und der Scheibenwischer synchron miteinander betrieben, zum Beispiel indem jeweils in dem Augenblick, in dem sich der Scheibenwischer im Blickfeld der Kamera befindet, nicht das aktuelle Bild, sondern das zuletzt übertragene Bild auf der Anzeigeoptik im Fahrzeug wiedergegeben wird. Das ausgeblendete Zeitintervall ist zu kurz, um vom Fahrer bemerkt zu werden.

Wenn eine Anordnung der Kamera ganz weit oben am Fahrzeug aus irgendwelchen Gründen nicht möglich oder erwünscht ist, kann die Kamera unauffällig und ohne Behinderung durch die Frontscheibe in einem der Außenspiegel untergebracht werden. Wird im zweiten Außenspiegel eine weitere Kamera untergebracht, wird Stereosehen und somit eine Entfernungsbestimmung von Objekten möglich, ohne dass man einen separaten Entfernungsmesser benötigt.

In einem anderen Ausführungsbeispiel ist die Kamera nicht nur in dem Wellenlängenbereich des oder der Laserscheinwerfer empfindlich, sondern auch im sichtbaren Spektrum, wie es zum Beispiel bei einem CCD-Sensor der Fall ist, wenn man das ansonsten übliche Filter für sichtbares Licht weglässt oder deaktivierbar macht. Dadurch kann die Kamera zusätzlich zu ihrer Verwendung bei schlechter Sicht auch als Tageslichtkamera verwendet werden, zum Beispiel um Bilder der aktuellen Verkehrsszene aufzunehmen, anhand derer eine automatische Erkennung von Fahrbahnrändern, Verkehrszeichen oder anderen sicherheitsrelevanten Details durchgeführt wird. Die erkannten Details werden daraufhin ausgewertet, ob irgendeine Gefahrensituation vorliegt, beispielsweise durch Abkommen von der Fahrbahn oder Überschreitung der zulässigen Geschwindigkeit, worauf der Fahrer dann durch akustische oder optische Warnsignale hingewiesen wird.

Wenn die für IR-Nachtsicht nötige Empfindlichkeit der Kamera für deren Verwendung als Tageslichtkamera zu hoch ist, wird sie mit einer automatisch einstellbaren Irisblende versehen, die bei Tag so weit geschlossen wird, dass die Kamera nicht überbelichtet wird. Es gibt aber auch Kameras, deren Lichtempfindlichkeit mit Hilfe ihrer Elektronik auf den jeweils nötigen Wert eingestellt werden kann, so dass man ohne irgendeine Mechanik auskommt.

In einem weiteren Ausführungsbeispiel werden der oder die Laserscheinwerfer und die Kamera nicht nur für das oben beschriebene System zur Verbesserung der Sicht bei Dunkelheit, schlechter Witterung und Nebel verwendet, sondern gleichzeitig von einem System zur Kommunikation mit anderen Fahrzeugen verwendet, zum Beispiel, um laufend Statusinformationen zu senden, um die Fahrer von vorausfahrenden oder entgegenkommenden Fahrzeugen vor irgendwelchen Gefahrensituationen zu warnen oder um Fahrzeuge, die mit eingeschaltetem Fernlicht entgegenkommen, automatisch zu veranlassen, auf Abblendlicht umzuschalten.

Zu diesem Zweck wird das eigentlich nur zur Sichtverbesserung abgestrahlte Laserlicht mit den zu übertragenden Informationen moduliert, und in einem Fahrzeug, das ebenfalls über die beschriebene Kamera und/oder irgendeinen anderen IR-Sensor verfügt und in die Reichweite des Laserlichtes gelangt, können die Informationen aus dem Laserlicht zurückgewonnen und ausgewertet werden.

## Patentansprüche

1. Verfahren zur Verbesserung der Sicht in einem Fahrzeug, insbesondere bei Dunkelheit, schlechter Witterung und Nebel, bei dem Laserlicht mit einer Wellenlänge außerhalb des sichtbaren Spektrums in einen vorgegebenen Raumwinkelbereich abgestrahlt wird, der mittels einer Kamera beobachtet wird, deren Bilder einem Fahrer angezeigt werden, **dadurch gekennzeichnet, dass** das Laserlicht und/oder die Kamera außerdem zur optischen Kommunikation mit anderen Fahrzeugen verwendet werden.

2. Verfahren nach Anspruch 1, **dadurch gekennzeichnet, dass** das Laserlicht mit den zu übertragenden Informationen moduliert wird.

3. Verfahren nach Anspruch 1 oder 2, **dadurch gekennzeichnet, dass** das von der Kamera empfangene Laserlicht auf darin enthaltene Informationen ausgewertet wird.

4. Verfahren nach einem der vorhergehenden Ansprüche, **dadurch gekennzeichnet, dass** das Laserlicht von mindestens zwei verschiedenen Typen von Laserscheinwerfern abgestrahlt wird, die jeweils unterschiedliche Teile des zu beobachtenden Raumwinkelbereiches ausleuchten.

5. Verfahren nach einem der vorhergehenden Ansprüche, **dadurch gekennzeichnet, dass** das Laserlicht an einer von der Vorderseite des Fahrzeuges entfernten Stelle erzeugt und durch einen oder mehrere Lichtleiter zur Vorderseite des Fahrzeuges geleitet wird.

6. Verfahren nach Anspruch 5, **dadurch gekennzeichnet, dass** ein Teil des Laserlichtes außerdem an die Rückseite des Fahrzeuges geleitet wird.
